(19) **Europäisches Patentamt / European Patent Office / Office européen des brevets**

(11) **EP 3 657 579 B1**

(12) **EUROPEAN PATENT SPECIFICATION**

(45) Date of publication and mention
of the grant of the patent:
**19.05.2021 Bulletin 2021/20**

(51) Int Cl.:
*H01M 4/1393* (2010.01)    *H01M 4/36* (2006.01)
*H01G 11/50* (2013.01)    *H01G 11/86* (2013.01)
*H01M 4/587* (2010.01)    *H01M 4/38* (2006.01)
*H01M 4/1395* (2010.01)    *H01M 10/052* (2010.01)
*H01M 10/058* (2010.01)    *H01G 11/14* (2013.01)
*H01M 4/133* (2010.01)    *H01G 11/06* (2013.01)

(21) Application number: **18835168.8**

(22) Date of filing: **18.07.2018**

(86) International application number:
**PCT/JP2018/026926**

(87) International publication number:
**WO 2019/017390 (24.01.2019 Gazette 2019/04)**

(54) **METHOD FOR PREDOPING NEGATIVE ELECTRODE ACTIVE MATERIAL, ELECTRODE FOR ELECTRICAL DEVICE, AND METHOD FOR MANUFACTURING ELECTRICAL DEVICE**

VERFAHREN ZUR HERSTELLUNG EINES NEGATIVELEKTRODEN-AKTIVMATERIALS, ELEKTRODE FÜR EINE ELEKTRISCHE VORRICHTUNG UND VERFAHREN ZUR HERSTELLUNG EINER ELEKTRISCHEN VORRICHTUNG

PROCÉDÉ DE PRÉ-DOPAGE DE MATÉRIAU ACTIF D'ÉLECTRODE NÉGATIVE, ÉLECTRODE POUR DISPOSITIF ÉLECTRIQUE, ET PROCÉDÉ DE FABRICATION DE DISPOSITIF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2017 JP 2017139393**

(43) Date of publication of application:
**27.05.2020 Bulletin 2020/22**

(73) Proprietor: **Nissan Motor Co., Ltd.**
**Yokohama-shi, Kanagawa 221-0023 (JP)**

(72) Inventors:
- **DOI, Shotaro**
  **Atsugi-shi**
  **Kanagawa 243-0123 (JP)**
- **KUSACHI, Yuki**
  **Atsugi-shi**
  **Kanagawa 243-0123 (JP)**
- **HORIE, Hideaki**
  **Atsugi-shi**
  **Kanagawa 243-0123 (JP)**
- **NAKASHIMA, Yusuke**
  **Kyoto-shi**
  **Kyoto 605-0995 (JP)**
- **TSUCHIDA, Kazuya**
  **Kyoto-shi**
  **Kyoto 605-0995 (JP)**
- **SUMIYA, Koji**
  **Tokyo 105-8640 (JP)**
- **ASANO, Shigehito**
  **Tokyo 105-8640 (JP)**
- **KOGA, Yasuyuki**
  **Tokyo 105-8640 (JP)**
- **ANDO, Nobuo**
  **Tokyo 105-8640 (JP)**
- **KOKUBO, Terukazu**
  **Tokyo 105-8640 (JP)**

(74) Representative: **Grünecker Patent- und Rechtsanwälte**
**PartG mbB**
**Leopoldstraße 4**
**80802 München (DE)**

(56) References cited:
WO-A1-2010/071166    WO-A1-2017/026253
JP-A- 2012 119 079    JP-A- 2012 209 195
JP-A- 2017 050 248

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

The present invention relates to a method for pre-doping a negative electrode active material and a method for manufacturing an electrode for an electric device and an electric device. An active material pre-doped by using the method for pre-doping a negative electrode active material according to the present invention, and an electrode for an electric device and an electric device which use the pre-doped active material are used for a driving power source or an auxiliary power source of a motor or the like serving as, for example, a lithium ion secondary battery, a lithium ion capacitor, or the like for use in vehicles such as an electric vehicle, a fuel cell vehicle, and a hybrid electric vehicle.

**BACKGROUND ART**

In recent years, it is sincerely desired to reduce the amount of carbon dioxide in order to cope with air pollution or global warming. In the automobile industry, expectations are focused on reduction of an emission amount of carbon dioxide by introduction of an electric vehicle (EV) and a hybrid electric vehicle (HEV), and development of an electric device such as a secondary battery for driving a motor, the electric device serving as a key for practical use of these vehicles, is actively pursued.

The secondary battery for driving a motor needs to have extremely high output characteristics and high energy as compared with consumer use lithium ion secondary batteries used in mobile phones, notebook personal computers, and the like. Accordingly, a lithium ion secondary battery, which has the highest theoretical energy among all batteries, is attracting attention and is now being developed rapidly.

Generally, a lithium ion secondary battery has a configuration in which a positive electrode formed by applying a positive electrode active material or the like to both sides of a positive electrode current collector using a binder and a negative electrode formed by applying a negative electrode active material or the like to both sides of a negative electrode current collector using a binder are connected through an electrolyte layer and are accommodated in a battery casing.

Conventionally, the negative electrode of the lithium ion secondary battery is made of a carbon/graphite-based material, which is advantageous in charge-discharge cycle life and cost. However, with a carbon/graphite-based negative electrode material, charge and discharge are performed by occlusion and release of lithium ions into and from graphite crystals, and accordingly, there is a disadvantage that a charge-discharge capacity equal to or more than a theoretical capacity of 372 mAh/g obtained from $LiC_6$, which is the maximum lithium introducing compound, is not obtainable. For this reason, it is difficult to obtain a capacity and an energy density which satisfy the level of practical use in vehicle applications from a carbon/graphite-based negative electrode material.

On the other hand, a battery including a negative electrode using a material which is alloyed with Li has improved energy density as compared with a conventional carbon/graphite-based negative electrode material, and thus the material which is alloyed with Li is expected as a negative electrode material in vehicle applications. For example, a Si material occludes and releases 3.75 mol of lithium ions per mol as in the following Reaction Formula (A) in charge and discharge, and the theoretical capacity is 3600 mAh/g in $Li_{15}Si_4$ (= $Li_{3.75}Si$).

[Chem. 1]

$$Si + 3.75Li^+ + e^- \rightleftarrows Li_{3.75}Si \qquad (A)$$

However, in most of lithium ion secondary batteries using such a carbon material or a material which is alloyed with lithium having a large capacity as a negative electrode active material, irreversible capacity at the time of initial charge and discharge is large. For this reason, problems arise in that the capacity utilization factor of a positive electrode filled is lowered and the energy density of a battery is lowered. Herein, the irreversible capacity means a difference between the initial charge capacity and the initial discharge capacity in the lithium ion secondary battery. This problem of the irreversible capacity has become a large problem of development in the practical use in vehicle applications requiring a high capacity, and attempts to suppress the irreversible capacity are actively made.

As a technology of compensating for lithium corresponding to such an irreversible capacity, a method of using, as a negative electrode active material, a carbon material having a predetermined amount of lithium powder previously attached to the surface thereof is proposed. According to this method, by preliminarily occluding (pre-doping) lithium in an amount corresponding to an initial charge-discharge capacity difference with respect to a negative electrode active material (undoped active material), a safe battery which can resolve the charge-discharge capacity difference at the time of initial charging and has a high capacity is obtainable.

Further, JP 2012-204306 A is aimed to provide a simple and practical method of pre-doping lithium to an active material, which is used in a power storage device such as a lithium ion secondary battery or a lithium ion capacitor, and discloses a method of kneading and mixing a material, which can be doped with lithium, and a lithium metal in the presence of a solvent and, at this time, applying collision or friction with balls by using a ball mill or the like. Further examples of pre-doping methods are disclosed in WO 2017/026253 A1 and JP 2012-209195 A.

Herein, any of methods for pre-doping lithium (lithium ion) to a negative electrode active material for an electric device which have been conventionally proposed are aimed to increase energy density of an electric device through compensation for generation of the irreversible capacity in the negative electrode active material. Further, even when lithium in an amount more than making up for the irreversible capacity is pre-doped, it is not possible to expect a further increase in energy density. Therefore, the amount of lithium pre-doped in these technologies has been set to the minimal amount necessary for compensating the irreversible capacity.

## SUMMARY OF INVENTION

Technical Problem

However, according to the investigations by the present inventors, it has been revealed that, when an electric device such as a lithium ion secondary battery is manufactured by using a negative electrode active material pre-doped with lithium using these pre-doping methods which have been proposed in the related arts, a large amount of gas is generated at the time of initial charging of the device. When the amount of gas generated at the time of initial charging of the electric device is large, an electrode-electrode distance between the positive and negative electrodes cannot be uniformly kept and thus a variation in electrode-electrode distance may occur. As a result, problems also arise in that unevenness in the degree of the progress in a battery reaction occurs in an in-plane direction of the battery, and further, local degradation proceeds.

As a result of the investigations by the present inventors, it has been revealed that, by further pre-doping lithium in an amount exceeding the minimum lithium pre-doping amount necessary for compensating the irreversible capacity, the amount of gas generated at the time of initial charging after the electric device is configured can be reduced. However, it has also been revealed that, in this scheme, the dope depth in the pre-doping step is too deep, and due to the deep dope depth, the lithium metal is precipitated as a dendrite when the electric device is charged and discharged. Generation of a lithium dendrite not only degrades reliability of the battery but also constitutes an obstacle to an increase in energy density, and thus there is a need for even further ingenuity.

In this regard, an object of the present invention is to provide a means capable of suppressing generation of a lithium dendrite at the time of charging and discharging while sufficiently suppressing an amount of gas generated at the time of initial charging of an electric device.

Solution to Problem

The present inventors have conducted intensive studies to solve the above-described problem. As a result, the present inventors have found that, by doping a lithium ion to a negative electrode active material to be doped, which is used in an electric device, a potential (vs. Li+/Li) of the active material to be doped with respect to a lithium metal is reduced, and then by dedoping the lithium ion from the negative electrode active material doped with the lithium ion, wherein the negative electrode active material doped with the lithium ion in the pre-doping step is mixed with a negative electrode active material having a potential nobler than that of the negative electrode active material doped with the lithium ion, in the dedoping step, so that the dedoping step is performed with respect to the negative electrode active material doped with the lithium ion, the potential (vs. Li+/Li) of the negative electrode active material with respect to the lithium metal is increased, and thus the above-described problem can be solved, thereby completing the present invention.

That is, an aspect of the present invention relates to a method for pre-doping a negative electrode active material, the method doping a lithium ion in advance to a negative electrode active material, which is used in an electric device including a positive electrode and a negative electrode. Further, the pre-doping method includes a pre-doping step of doping the lithium ion to a negative electrode active material to be doped to reduce a potential (vs. Li+/Li) of the negative electrode active material to be doped with respect to a lithium metal, and a dedoping step of dedoping the lithium ion from the negative electrode active material doped with the lithium ion in the pre-doping step after the pre-doping step to increase a potential (vs. Li+/Li) of the negative electrode active material with respect to the lithium metal, wherein the negative electrode active material doped with the lithium ion in the pre-doping step is mixed with a negative electrode active material having a potential nobler than that of the negative electrode active material doped with the lithium ion, in the dedoping step, so that the dedoping step is performed with respect to the negative electrode active material doped with the lithium ion.

**BRIEF DESCRIPTION OF DRAWINGS**

Fig. 1 is a graph in which a change in potential (E) of a negative electrode and a change in cell internal pressure (P) as an index for a gas generation amount in a cell with respect to a dope depth in a pre-doping treatment to a negative electrode active material are plotted.

Fig. 2 is a graph showing a charge-discharge curve of a positive electrode and a negative electrode in an electric device (lithium ion secondary battery).

Fig. 3 is a schematic cross-sectional view schematically illustrating the overview of a laminate type flat non-bipolar lithium ion secondary battery as a typical embodiment of an electric device.

Fig. 4 is a perspective view schematically illustrating an exterior of the laminate type flat lithium ion secondary battery as the typical embodiment of the electric device.

**DESCRIPTION OF EMBODIMENTS**

Hereinafter, a mode for carrying out the present invention will be described with reference to the drawings. Here, the technical scope of the present invention should be defined based on the description of claims and is not limited only to the following embodiment. Incidentally, in the description of the drawings, the same components are given the same reference numerals, and duplicate descriptions are omitted. Further, the dimensional proportions in the drawings are exaggerated for convenience of explanation and are different from actual proportions in some cases. Furthermore, in the present specification, a "potential" simply described herein means a "potential (vs. Li+/Li) with respect to a lithium metal."

<<Method for pre-doping negative electrode active material>>

As described above, an aspect (first aspect) of the present invention relates to a method for pre-doping a negative electrode active material, the method doping a negative electrode active material, which is used in an electric device including a positive electrode and a negative electrode, with a lithium ion in advance. Further, the pre-doping method performs a pre-doping step and a dedoping step in this order by using a negative electrode active material, which is used as a target to be pre-doped with a lithium ion (in the present specification, also referred to as "negative electrode active material to be doped"), as a starting material. Hereinafter, the steps will be described in detail in the order of the steps.

<Pre-doping step>

This step is a step of doping a lithium ion to a negative electrode active material to be doped. According to thus, a potential (vs. Li+/Li) of the negative electrode active material to be doped with respect to a lithium metal is reduced.

(Negative electrode active material to be doped)

The type of the negative electrode active material to be doped that is a target to be pre-doped with a lithium ion by the pre-doping method according to the present invention is not particularly limited, and conventionally known knowledge on negative electrode active materials for an electric device can be appropriately referred to. Examples of the negative electrode active material to be doped include carbon materials such as graphite such as artificial graphite, coated natural graphite, and natural graphite, soft carbon, and hard carbon, a lithium-transition metal composite oxide (for example, $Li_4Ti_5O_{12}$), a metal material, a lithium alloy-based negative electrode material, and the like. In some cases, two or more kinds of the negative electrode active materials may be used together. Preferably, from the viewpoints of capacity and output characteristics, a carbon material or a lithium-transition metal composite oxide is used as the negative electrode active material. Incidentally, it is certain that negative electrode active materials other than the above-described materials may be used.

The volume average particle size (D50) of the negative electrode active material to be doped is not particularly limited, but from the viewpoint of having high output, is preferably 1 to 100 $\mu$m and more preferably 5 to 30 $\mu$m. Incidentally, in the present specification, a value of "the volume average particle size (D50) of the active material particle" means a value of a volume-based cumulative 50% particle size obtained by a laser diffractometry.

Herein, the negative electrode active material to be doped is doped with a lithium ion in the pre-doping step, but may be a negative electrode active material to be doped, which is not doped with a lithium ion at all or may be a negative electrode active material to be doped, which is doped with a lithium ion, before the pre-doping step is executed.

However, from the viewpoint of sufficiently obtaining the action and effect of the present invention, in a case where a negative electrode active material doped with a lithium ion is used as the negative electrode active material to be doped, it is preferable that a potential of the negative electrode active material be larger than a potential ($E_{g(max)}$) at which a gas generation amount when the lithium ion is firstly doped to the negative electrode active material becomes maximum. Further, specifically, the potential of the negative electrode active material is preferably 0.30 V (vs. Li+/Li) or more, more preferably 0.50 V (vs. Li+/Li) or more, further preferably 0.70 V (vs. Li+/Li) or more, particularly preferably 0.90 V (vs. Li+/Li) or more, and most preferably 1.0 V (vs. Li+/Li) or more.

(Method for doping lithium ion)

In this step, a specific method for doping a lithium ion to a negative electrode active material to be doped is not particularly limited, and conventionally known knowledge thereon can be appropriately referred to.

As an example of the method for doping a lithium ion to a negative electrode active material to be doped, there is mentioned a method in which a negative electrode active material to be doped is dispersed together with metal lithium in a known electrolyte solution (liquid electrolyte) to prepare a slurry, and this slurry is kneaded to dope, to the negative electrode active material to be doped, a lithium ion in an amount corresponding to the amount of metal lithium added (slurry kneading method). At this time, kneading may be performed at room temperature. Further, the kneading means is also not particularly limited, and a conventionally known kneader (for example, HIVIS MIX (manufactured by PRIMIX Corporation)) may be preferably used.

Further, as another example of the method for doping a lithium ion to a negative electrode active material to be doped, there is mentioned a method in which a negative electrode active material layer (negative electrode mix layer) is produced using a negative electrode active material to be doped, this layer is disposed at the working electrode and a lithium metal layer (lithium metal foil) is disposed at the counter electrode via a separator, and a negative electrode half cell obtained by sandwiching this laminate body by a pair of current collectors (for example, copper foil) is used. In this method, first, a product obtained by connecting electrode leads to the current collectors located in the both outermost layers of the negative electrode half cell produced as described above is sealed inside an outer casing body formed from a laminate sheet such that ends of the electrode leads are exposed. Next, the electrolyte solution is injected to vacuum-seal the outer casing body, and the charging treatment is performed with respect to the working electrode (negative electrode active material layer) of the negative electrode half cell by using a conventionally known charge-discharge apparatus. According to this, the lithium ion can be doped to the negative electrode active material to be doped (external short circuit method).

Even when any methods are employed, by doping the lithium ion to the negative electrode active material to be doped, the potential (vs. Li+/Li) of the negative electrode active material to be doped with respect to a lithium metal is decreased. As the potential of the negative electrode active material to be doped is decreased according to the doping with the lithium ion, gas is generated from the negative electrode active material to be doped. In the method for pre-doping a negative electrode active material according to this aspect, in this way, gas can be generated from the negative electrode active material in the pre-doping step. Therefore, the amount of gas generated in the charging step after an electric device is configured can be decreased.

Incidentally, in the present specification, a potential (vs. Li+/Li) of the negative electrode active material with respect to the lithium metal at the end of the pre-doping step is called "first potential ($E_1$)." Herein, there is not particular limitation on the extent of a value of the first potential ($E_1$) to be set (in other words, the extent of the dope depth at which the lithium ion is doped in the pre-doping step). However, as described above, from the viewpoint of decreasing the gas generation amount in the charging step after an electric device is configured by preliminarily generating gas in the pre-doping step, it is preferable that the first potential ($E_1$) be smaller.

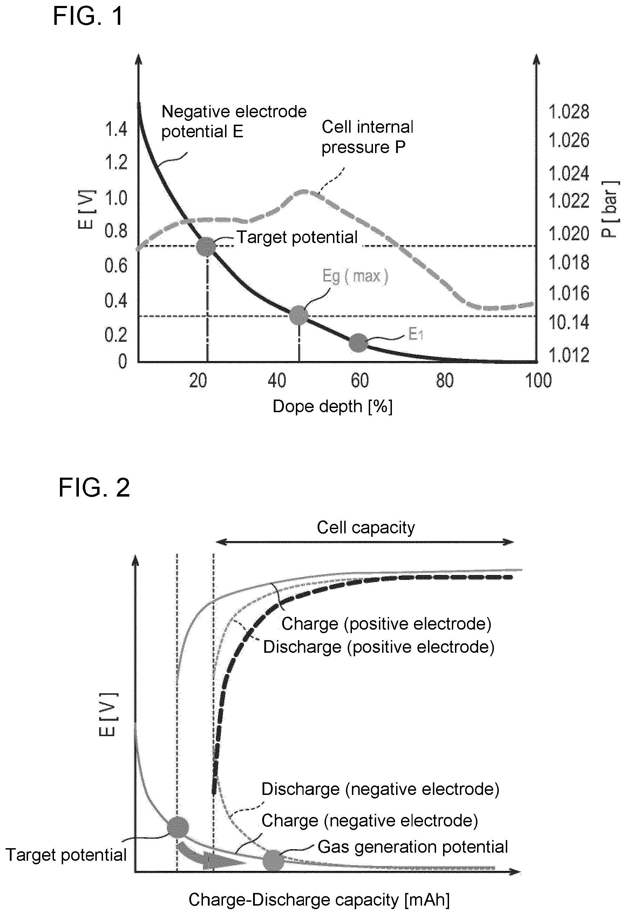

Herein, Fig. 1 is a graph in which a change in potential (E) of a negative electrode and a change in cell internal pressure (P) as an index for a gas generation amount in a cell with respect to a dope depth in a pre-doping treatment to a negative electrode active material are plotted. As illustrated in Fig. 1, according to the investigations by the present inventors, it has been revealed that the peak of gas generation from the negative electrode active material is located at a potential (deeper dope depth) ("$E_{g(max)}$" illustrated in Fig. 1) lower than the potential (dope depth) ("target potential" illustrated in Fig. 1) of the negative electrode active material corresponding to the pre-doped amount of lithium for compensating the irreversible capacity. From this point, the present inventors have attempted to further pre-dope lithium in an amount exceeding the minimum lithium pre-doping amount necessary for compensating the irreversible capacity, and thus, by preliminarily generating gas in the pre-doping step as described above, the amount of gas generated at the time of initial charging after the electric device is configured can be reduced. That is, from the viewpoint of reducing the amount of gas generated at the time of initial charging after the electric device is configured, it is preferable that the first potential ($E_1$) be a potential (narrow dope depth) lower than the potential (dope depth) ("target potential" illustrated in Fig. 1) of the negative electrode active material corresponding to the pre-doped amount of lithium for compensating the irreversible capacity. Further, from the same viewpoint, when a potential at which a gas generation amount when the lithium ion is firstly doped to the negative electrode active material to be doped becomes maximum is designated as $E_{g(max)}$, it is more preferable that a first potential ($E_1$) satisfy a relation "$E_1 \leq E_{g(max)}$" and it is further preferable that the first potential ($E_1$) satisfy a relation "$E_1 < E_{g(max)}$" (an embodiment illustrated in Fig. 1). Incidentally, the "potential of the negative electrode active material corresponding to the pre-doped amount of lithium for compensating the irreversible capacity" and the "potential ($E_{g(max)}$) at which a gas generation amount when the lithium ion is firstly doped to the negative electrode active material to be doped becomes maximum" can be measured by conventionally known methods. Herein, specifically, the first potential ($E_1$) is preferably 1.0 V (vs. Li+/Li) or less, more preferably 0.90 V (vs. Li+/Li) or less, further preferably 0.75 V (vs. Li+/Li) or less, still more preferably 0.50 V (vs. Li+/Li) or less, particularly preferably 0.30 V (vs. Li+/Li) or less, and most preferably 0.20 V (vs. Li+/Li) or less. Meanwhile, the upper limit of the first potential ($E_1$) is not particularly limited, and may be preferably 0.01 V (vs. Li+/Li) or more.

<Dedoping step>

This step is a step of dedoping the lithium ion from the negative electrode active material doped with the lithium ion in the pre-doping step described above. According to thus, a potential (vs. Li+/Li) of the negative electrode active material with respect to a lithium metal is increased. Herein, in the present specification, a potential (vs. Li+/Li) of the negative electrode active material with respect to the lithium metal at the end of the dedoping step is called "second potential ($E_2$)."

As described above, according to the investigations by the present inventors, it has been revealed that, by performing the pre-doping step (preferably, by further pre-doping lithium in an amount exceeding the minimum lithium pre-doping amount necessary for compensating the irreversible capacity), the amount of gas generated at the time of initial charging after the electric device is configured can be reduced. However, it has been revealed from the result of further investigations that, in this scheme, another problem arises. That is, it has been revealed that, in the above-described scheme, the dope depth in the pre-doping step is too deep, and due to the deep dope depth, the lithium metal is precipitated as a dendrite when the electric device is charged and discharged. Herein, Fig. 2 is a graph showing a charge-discharge curve of a positive electrode and a negative electrode in an electric device (lithium ion secondary battery). As shown in Fig. 2, there is a certain region between the charge curve and the discharge curve, and this corresponds to the irreversible capacity. Then, at the time of configuring a cell, the type and the basis weight of the positive and negative electrode active materials are determined in many cases such that the remaining capacities (reversible capacities) obtained by subtracting an irreversible capacity from each of capacities of the respective positive and negative electrodes are the same as each other. When the amount of lithium ion doped to the negative electrode active material is increased too much in a cell achieving AC balance in this way, all of the lithium ions released from the positive electrode active material at the time of initial charging cannot be occluded in the negative electrode active material. The lithium ion which is not occluded in the negative electrode active material is crystallized and precipitated as a lithium dendrite. Generation of a lithium dendrite not only degrades reliability of the battery but also constitutes an obstacle to an increase in energy density, and thus there has been a need for even further ingenuity.

Under such circumstances, the present inventors have found that, by further performing a step of dedoping the lithium ion from the negative electrode active material doped with the lithium ion in the above-described pre-doping step (dedoping step), generation of a lithium dendrite at the time of charging and discharging can be suppressed. That is, according to the pre-doping method according to this aspect, it is possible to suppress generation of a lithium dendrite at the time of charging and discharging while sufficiently suppressing an amount of gas generated at the time of initial charging of an electric device.

(Negative electrode active material doped with lithium ion)

In the step, the "negative electrode active material doped with the lithium ion" that is a target from which the lithium ion is dedoped is not particularly limited, and an arbitrary negative electrode active material doped with a lithium ion in the above-described pre-doping step may be used. Incidentally, the "negative electrode active material doped with the lithium ion" in this step may be a material immediately after the end of the above-described pre-doping step or a material obtained when a certain period of time elapses after the end of the above-described pre-doping step. Further, the potential of the "negative electrode active material doped with the lithium ion" in this step (the potential (vs. Li+/Li) of the negative electrode active material at the start of the dedoping step) may vary (increase or decrease) as compared with the potential ($E_1$) at the end of the above-described pre-doping step. However, it is preferable that the potential of the "negative electrode active material doped with the lithium ion" in this step actually do not vary as compared with the potential ($E_1$) at the end of the above-described pre-doping step. Specifically, the potential of the "negative electrode active material doped with the lithium ion" in this step is preferably a value in a range of $\pm 0.5$ V (vs. Li+/Li), more preferably a value in a range of $\pm 0.3$ V (vs. Li+/Li), further preferably a value in a range of $\pm 0.1$ V (vs. Li+/Li), and particularly preferably a value in a range of $\pm 0.05$ V (vs. Li+/Li), with respect to the potential ($E_1$) at the end of the above-described pre-doping step.

(Method for dedoping lithium ion)

In a case where a slurry kneading method is employed in the pre-doping step, it is simple that, in the dedoping step, the dedoping step is performed with respect to the "negative electrode active material doped with the lithium ion" by mixing the "negative electrode active material doped with the lithium ion" and a material having a potential nobler than that of the negative electrode active material. By performing such a treatment, the lithium ion dedoped from the "negative electrode active material doped with the lithium ion" in the mixture and is occluded in the "negative electrode active material which is capable of occluding a lithium ion."

In this case, the configuration of the "material having a potential nobler than that of the negative electrode active material doped with the lithium ion" is not particularly limited as long as the material has a potential nobler than the potential of the "negative electrode active material doped with the lithium ion" (the potential (vs. Li+/Li) of the negative electrode active material at the start of the dedoping step). As an example of the "material having a potential nobler than that of the negative electrode active material doped with the lithium ion," there is mentioned the same negative electrode active material as the "negative electrode active material doped with the lithium ion" which is a negative electrode active material having a shallower dope depth than that of the "negative electrode active material doped with the lithium ion." At this time, a difference in dope depth between the "negative electrode active material doped with the lithium ion" and the "negative electrode active material having a narrower dope depth than that of the negative electrode active material doped with the lithium ion" at the start of the dedoping step is not particularly limited, and the difference in dope depth can be appropriately determined in consideration of the dope depth of the negative electrode active material to be finally achieved (in other words, the second potential ($E_2$)). Further, as long as the negative electrode active material has a potential nobler than that of the negative electrode active material doped with the lithium ion, the dedoping step may be performed using a negative electrode active material different from the "negative electrode active material doped with the lithium ion." Incidentally, "the same negative electrode active material as the negative electrode active material doped with the lithium ion" means an active material exhibiting substantially the same chemical structure and charging/discharging profile as those of the "negative electrode active material doped with the lithium ion."

By dedoping the lithium ion from the "negative electrode active material doped with the lithium ion," the potential (vs. Li+/Li) of the "negative electrode active material doped with the lithium ion" with respect to a lithium metal is increased. As the potential of the negative electrode active material is increased according to the dedoping of the lithium ion, a concern that a lithium dendrite is generated when an electric device is charged and discharged is reduced.

There is no particular limitation on the extent of a value of the second potential ($E_2$) to be set (in other words, the extent of the dope depth at which the lithium ion is dedoped in the dedoping step). However, as described above, from the viewpoint of reducing a concern that a lithium dendrite is generated at the time of charging and discharging the electric device, it is preferable that the second electrode ($E_2$) be larger. For all that, since the concern of generating a lithium dendrite can be reduced without limit as long as the potential is a higher than a certain threshold potential, in a preferred embodiment, it can be said that the second potential ($E_2$) is preferably set to a potential at which the initial discharge capacity of the electric device becomes maximum. Incidentally, a specific value of the "potential at which the initial discharge capacity of the electric device becomes maximum" cannot be unambiguously defined since the value can vary also depending on the type and the composition of the various members constituting the electric device, but if a specification of an electric device to be desired to be manufactured is determined, those skilled in the art can determine the potential by a conventionally known method. Further, in many cases, the "potential at which the initial discharge capacity of the electric device becomes maximum" has a range of $\pm 0.10$ V (vs. Li+/Li) with respect to the "potential at which the initial discharge capacity of the electric device becomes maximum" in the case of a negative electrode active material having a non-flat charge-discharge curve. Herein, specifically, the second potential ($E_2$) is preferably more than 0.30 V (vs. Li+/Li), more preferably 0.40 V (vs. Li+/Li) or more, further preferably 0.60 V (vs. Li+/Li) or more, still more preferably 0.75 V (vs. Li+/Li) or more, still more preferably 0.90 V (vs. Li+/Li) or more, and most preferably 1.00 V (vs. Li+/Li) or more. Meanwhile, the upper limit of the second potential ($E_2$) is not particularly limited, and may be preferably 1.50 V (vs. Li+/Li) or less.

<<Negative electrode and electric device (lithium ion secondary battery)>>

The negative electrode active material subjected to the pre-doping treatment by the method for pre-doping a negative electrode active material according to this aspect can be used in manufacturing of a negative electrode for an electric device. That is, according to another aspect (second aspect) of the present invention, there is provided a method for manufacturing a negative electrode for an electric device, the negative electrode being used in an electric device including a positive electrode and a negative electrode, the method including: pre-doping the active material to be doped by the method for pre-doping a negative electrode active material according to the above-described aspect (first aspect) to obtain a negative electrode active material doped with a lithium ion and then manufacturing the negative electrode by using the negative electrode active material doped with the lithium ion.

Further, the negative electrode for an electric device manufactured by the method for manufacturing a negative electrode for an electric device according to the above-described aspect (second aspect) may be used in manufacturing of an electric device. That is, according to still another aspect (third aspect) of the present invention, there is also provided a method for manufacturing an electric device including a positive electrode and a negative electrode, the method including obtaining a negative electrode for an electric device by the method for manufacturing a negative electrode for an electric device according to the above-described aspect (second aspect) and then manufacturing the electric device by using the negative electrode for an electric device.

Hereinafter, the basic configuration of the electric device to which the negative electrode active material subjected to the pre-doping treatment by the method for pre-doping a negative electrode active material according to the first aspect of the present invention will be described using the drawings. In this aspect, as the electric device, a lithium ion secondary battery is exemplified and described.

First, in a negative electrode for a lithium ion secondary battery, which is a typical embodiment of a negative electrode containing the negative electrode active material subjected to the pre-doping treatment by the method for pre-doping a negative electrode active material according to the first aspect of the present invention, and a lithium ion secondary battery using the same, a voltage of a cell (single battery layer) is large, and a high energy density and a high output density can be achieved. Therefore, the lithium ion secondary battery, which uses the negative electrode active material for a lithium ion secondary battery of this aspect, is excellent as those for a driving power supply and an auxiliary power supply for a vehicle. As a result, the lithium ion secondary battery of this aspect can be suitably used as a lithium ion secondary battery for a driving power supply or the like for a vehicle. In addition, the lithium ion secondary battery of this aspect is adequately applicable to lithium ion secondary batteries for mobile devices such as mobile phones.

That is, the lithium ion secondary battery, which is a target of this aspect, only needs to include the negative electrode active material for a lithium ion secondary battery of this aspect described below, and other constituent requirements should not be particularly limited.

For example, in a case where the lithium ion secondary batteries are classified by the form and structure, the negative electrode active material of this aspect is applicable to every conventionally known form and structure of laminate type (flat) batteries, winding type (cylindrical) batteries, and the like. When the laminate type (flat) battery structure is employed, long-term reliability is ensured by a sealing technique such as simple thermocompression, and the laminate type (flat) battery structure is advantageous in terms of cost and workability.

Further, classifying lithium ion secondary batteries by the electric connection manner (electrode structure), the present invention is applicable to both non-bipolar type (inner parallel connection type) batteries and bipolar type (inner serial connection type) batteries.

In a case where lithium ion secondary batteries are classified by the type of electrolyte layers therein, the negative electrode active material of this aspect is applicable to batteries including every conventionally known types of electrolyte layers, such as liquid electrolyte batteries whose electrolyte layers are composed of liquid electrolyte such as non-aqueous electrolyte solution and polymer batteries whose electrolyte layers are composed of polymer electrolyte. The polymer batteries are further classified into gel electrolyte batteries employing polymer gel electrolyte (also simply referred to as gel electrolyte) and solid polymer (all-solid-state) batteries employing polymer solid electrolyte (also simply referred to as polymer electrolyte).

Therefore, in the following description, a non-bipolar (inner parallel connection type) lithium ion secondary battery including the negative electrode active material for a lithium ion secondary battery of this aspect is briefly described using the drawings. Here, the technical scope of the lithium ion secondary battery of this aspect is not limited to the following description.

<Entire structure of battery>

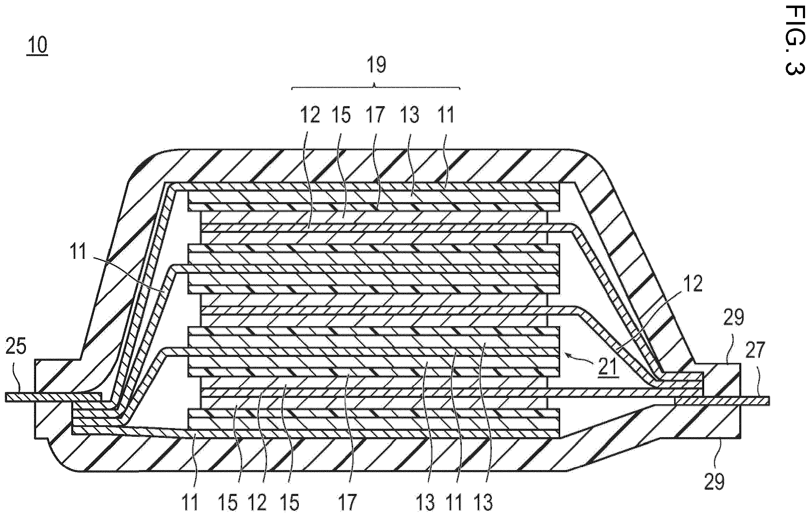

Fig. 3 is a schematic cross-sectional view schematically illustrating the entire structure of a flat (laminate type) lithium ion secondary battery (hereinafter, also simply referred to as a "laminate type battery") as a typical embodiment of an electric device.

As illustrated in Fig. 3, a laminate type battery 10 of this embodiment has a structure in which a substantially rectangular power generating element 21 in which charging and discharging reactions actually proceed is sealed inside laminate sheets 29 serving as outer casing bodies. Herein, the power generating element 21 has a configuration in which positive electrodes, electrolyte layers 17, and negative electrodes are stacked on one another, each positive electrode including positive electrode active material layers 15 disposed on both sides of a positive electrode current collector 12, each negative electrode including negative electrode active material layers 13 disposed on both sides of a negative electrode current collector 11. Specifically, each negative electrode, electrolyte layer, and positive electrode are stacked on one another in this order such that one positive electrode active material layer 15 and the negative electrode active material layer 13 adjacent thereto face each other with the electrolyte layer 17 interposed therebetween.

Accordingly, the adjacent positive electrode, electrolyte layer, and negative electrode constitute one single battery layer 19. Therefore, it can also be said that the laminate type battery 10 illustrated in Fig. 3 has such a configuration that a plurality of single battery layers 19 are stacked on one another to be electrically connected in parallel. Incidentally, each of the outermost positive electrode current collectors which are located in the outermost layers of the power generating element 21 is provided with the positive electrode active material layer 15 on only one side thereof but may be provided with the active material layers on both sides. That is, the outermost layers may be just composed of current collectors each provided with active material layers on both sides instead of the outermost layer-dedicated current collectors each provided with an active material layer only on one side. Further, the positions of the positive electrodes and negative electrodes in Fig. 3 may be inverted so that the outermost negative electrode current collectors are located in both outermost layers of the power generating element 21 and are each provided with a negative electrode active material layer on one side or both sides thereof.

The positive electrode current collectors 12 and the negative electrode current collectors 11 are respectively attached to a positive electrode current collecting plate 27 and a negative electrode current collecting plate 25, which are electrically connected to respective electrodes (positive and negative electrodes), and the current collecting plates 25 and 27 are sandwiched by edges of the laminate sheets 29 and drawn outside the laminate sheets 29. The positive electrode current collecting plate 27 and the negative electrode current collecting plate 25 may be attached to the positive electrode current collector 12 and the negative electrode current collector 11 of the respective electrodes through a positive electrode lead and a negative electrode lead (not illustrated) by ultrasonic welding, resistance welding, or the like as necessary.

The lithium ion secondary battery described above is characterized in that the negative electrode active material is subjected to a predetermined pre-doping treatment.

<Active material layer>

The active material layer 13 or 15 contains an active material, and as necessary, further contains other additives.

[Positive electrode active material layer]

The positive electrode active material layer 15 contains a positive electrode active material.

(Positive electrode active material)

Examples of the positive electrode active material include a lithium-transition metal composite oxide such as $LiMn_2O_4$, $LiCoO_2$, $LiNiO_2$, $Li(Ni-Mn-Co)O_2$, and a compound in which a part of these transition metals is replaced with another element, a lithium-transition metal phosphate compound, a lithium-transition metal sulfate compound, and the like. In some cases, two or more kinds of the positive electrode active materials may be used together. Preferably, from the viewpoints of capacity and output characteristics, a lithium-transition metal composite oxide is used as the positive electrode active material. More preferably, a composite oxide containing lithium and nickel is used, and more preferably, $Li(Ni-Mn-Co)O_2$ and a composite oxide in which a part of these transition metals is replaced with another element (hereinafter, also simply referred to as "NMC composite oxide") are used. The NMC composite oxide has a layered crystal structure in which a lithium atom layer and a transition metal (Mn, Ni, and Co are arranged with regularity) atom layer are alternately stacked with an oxygen atom layer interposed therebetween, one Li atom is included per atom of transition metal M, and the extractable Li amount is twice the amount of spinel lithium manganese oxide, that is, as the supply capacity is twice higher, so that the NMC composite oxide can have a high capacity.

As described above, the NMC composite oxide also includes a composite oxide in which a part of a transition metal element is replaced with another metal element. In this case, examples of another element include Ti, Zr, Nb, W, P, Al, Mg, V, Ca, Sr, Cr, Fe, B, Ga, In, Si, Mo, Y, Sn, V, Cu, Ag, Zn, and the like, Ti, Zr, Nb, W, P, Al, Mg, V, Ca, Sr, and Cr are preferred, Ti, Zr, P, Al, Mg, and Cr are more preferred, and from the viewpoint of improving cycle characteristics, Ti, Zr, Al, Mg, and Cr are further preferred.

By having a high theoretical discharge capacity, the NMC composite oxide preferably has a composition represented by General Formula (1) : $Li_aNi_bMn_cCo_dM_xO_2$ (provided that, in the formula, a, b, c, d, and x satisfy $0.9 \leq a \leq 1.2$, $0 < b < 1$, $0 < c \leq 0.5$, $0 < d \leq 0.5$, $0 \leq x \leq 0.3$, and b + c + d = 1. M represents at least one element selected from Ti, Zr, Nb, W, P, Al, Mg, V, Ca, Sr, and Cr). Herein, a represents the atomic ratio of Li, b represents the atomic ratio of Ni, c represents the atomic ratio of Mn, d represents the atomic ratio of Co, and x represents the atomic ratio of M. From the viewpoint of cycle characteristics, it is preferable that in General Formula (1), $0.4 \leq b \leq 0.6$ be satisfied. Incidentally, the composition of each element can be measured, for example, by plasma (ICP) emission spectrometry.

In general, nickel (Ni), cobalt (Co), and manganese (Mn) are known to contribute to capacity and output characteristics from the viewpoints of improving purity of a material and improving electron conductivity. Ti or the like replaces a part of a transition metal in a crystal lattice. From the viewpoint of cycle characteristics, it is preferable that a part of a transition element be replaced with another metal element, and particularly, it is preferable that $0 < x \leq 0.3$ in General Formula (1) be satisfied. It is considered that the crystal structure is stabilized by dissolving at least one kind selected from the group consisting of Ti, Zr, Nb, W, P, Al, Mg, V, Ca, Sr, and Cr, and as a result, a decrease in capacity of a battery can be prevented even when charge and discharge are repeated, so that excellent cycle characteristics can be realized.

As a more preferred embodiment, it is preferable, from the viewpoint of improving the balance between the capacity and the lifetime characteristics, that in General Formula (1), b, c, and d satisfy $0.44 \leq b \leq 0.51$, $0.27 \leq c \leq 0.31$, and $0.19 \leq d \leq 0.26$. For example, as compared with $LiCoO_2$, $LiMn_2O_4$, $LiNi_{1/3}Mn_{1/3}CO_{1/3}O_2$, and the like that exhibit actual performance in a general consumer use battery, $LiNi_{0.5}Mn_{0.3}Co_{0.2}O_2$ has a large capacity per unit weight and can improve the energy density, and thus $LiNi_{0.5}Mn_{0.3}Co_{0.2}O_2$ has an advantage that a compact and high capacity battery can be manufactured and is also preferred from the viewpoint of a cruising distance. Incidentally, in terms of having a larger capacity, $LiNi_{0.8}Co_{0.1}Al_{0.1}O_2$ is more advantageous but has a difficulty in lifetime characteristics. In this regard, $LiNi_{0.5}Mn_{0.3}Co_{0.2}O_2$ has excellent lifetime characteristics like $LiNi_{1/3}Mn_{1/3}Co_{1/3}O_2$.

In some cases, two or more kinds of the positive electrode active materials may be used together. Preferably, from the viewpoints of capacity and output characteristics, a lithium-transition metal composite oxide is used as the positive electrode active material. Incidentally, it is certain that positive electrode active materials other than the above-described materials may be used.

The volume average particle size (D50) of the positive electrode active material contained in the positive electrode active material layer 15 is not particularly limited, but from the viewpoint of having high output, is preferably 1 to 30 $\mu$m and more preferably 5 to 20 $\mu$m.

The positive electrode active material layer 15 may contain a binder, a conductive aid, a lithium salt, an ion conductive polymer, and the like.

(Binder)

The binder is added for maintaining the electrode structure by binding the active materials to each other or the active material and the current collector to each other. The binder used in the positive electrode active material layer is not particularly limited, but for example, the following materials are mentioned. Examples thereof include a thermoplastic polymer such as polyethylene, polypropylene, polyethylene terephthalate (PET), polyethernitrile (PEN), polyacrylonitrile, polyimide, polyamide, polyamide imide, cellulose, carboxymethyl cellulose (CMC), an ethylene-vinyl acetate copolymer, polyvinylchloride, styrene-butadiene rubber (SBR), isoprene rubber, butadiene rubber, ethylene-propylene rubber, an ethylene-propylene-diene copolymer, a styrene-butadiene-styrene block copolymer and a hydrogenated product thereof, or a styrene-isoprene-styrene block copolymer and a hydrogenated product thereof; a fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), or polyvinyl fluoride (PVF); vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), or vinylidene fluoride-chlorotrifluoroethylene-based fluorine rubber (VDF-CTFE-based fluorine rubber); an epoxy resin; and the like. Among them, polyvinylidene fluoride, polyimide, styrene-butadiene rubber, carboxymethyl cellulose, polypropylene, polytetrafluoroethylene, polyacrylonitrile, polyamide, and polyamide imide are more preferred. These suitable binders are excellent in heat resistance, further have extremely wide potential windows, are stable at both of the positive electrode potential and the negative electrode potential, and are usable in the active material layer. These binders may be used singly or in combination of two or more kinds thereof.

The amount of binder contained in the positive electrode active material layer is not particularly limited as long as it is enough to bind the active material, but is preferably 0.5 to 15 mass% and more preferably 1 to 10 mass%, with respect to the active material layer.

(Conductive aid)

The conductive aid refers to an additive to be blended for improving the electrical conductivity of the positive electrode active material layer. Examples of the conductive aid include carbon materials including carbon black such as acetylene black, graphite, vapor-grown carbon fibers, and the like. When the active material layer contains the conductive aid, an electron network is effectively formed inside the active material layer, thus contributing to an improvement in output characteristics of the battery.

The content of the conductive aid mixed into the positive electrode active material layer is in a range of preferably 1 mass% or more, more preferably 3 mass% or more, and further preferably 5 mass% or more, with respect to the total amount of positive electrode active material layer. Further, the content of the conductive aid mixed into the positive electrode active material layer is in a range of preferably 15 mass% or less, more preferably 10 mass% or less, and further preferably 7 mass% or less, with respect to the total amount of active material layer.

Further, a conductive binder functioning as both of the conductive aid and the binder may be used instead of the conductive aid and the binder, or may be used together with one or both of the conductive aid and the binder. As the conductive binder, TAB-2 (manufactured by Hohsen Corp.), which is already commercially available, can be used.

(Lithium salt)

Examples of the lithium salt include inorganic acid lithium salts such as $LiPF_6$, $LiBF_4$, $LiSbF_6$, $LiAsF_6$, and $LiClO_4$, organic acid lithium salts such as $LiN(CF_3SO_2)_2$, $LiN(C_2F_5SO_2)_2$, and $LiC(CF_3SO_2)_3$, and the like. Of these, from the viewpoints of battery output and charge-discharge cycle characteristics, $LiPF_6$ is preferred.

(Ion conductive polymer)

Examples of the ion conductive polymer include polyethylene oxide (PEO)-based and polypropylene oxide (PPO)-based polymers.

The positive electrode (positive electrode active material layer) can be formed by any method of a kneading method, a sputtering method, a vapor deposition method, a CVD method, a PVD method, an ion plating method, and a thermal spraying method, in addition to a known method of applying (coating) a slurry.

[Negative electrode active material layer]

The negative electrode active material layer 13 contains a negative electrode active material.

(Negative electrode active material)

In this aspect, the negative electrode active material is a negative electrode active material subjected to the pre-doping treatment by the method for pre-doping a negative electrode active material according to the first aspect of the present invention described above. The details of such a pre-doping method and the characteristic configuration of the negative electrode active material thus obtained are the same as described above, and thus herein, the descriptions thereof will be omitted. Incidentally, the negative electrode active material contained in the negative electrode active material layer 13 may be a negative electrode active material, the entirety of which is subjected to the above-described pre-doping treatment or may include a part of a negative electrode active material which is not subjected to the above-described pre-doping treatment. In a preferred embodiment, the proportion of the negative electrode active material subjected to the above-described pre-doping treatment in 100 mass% of the negative electrode active material contained in the negative electrode active material layer 13 is preferably 50 mass% or more, more preferably 70 mass% or more, further preferably 85 mass% or more, still more preferably 90 mass% or more, particularly preferably 95 mass% or more, and most preferably 100 mass%. Further, in a case where the power generating element 21 has a plurality of the negative electrode active material layers 13, at least one negative electrode active material layer 13 may contain the negative electrode active material subjected to the above-described pre-doping treatment, but preferably, all of the negative electrode active material layers 13 contain the negative electrode active material subjected to the above-described pre-doping treatment. Incidentally, the content of the negative electrode active material contained in the negative electrode active material layer 13 is not particularly limited, but is preferably 80 to 100 mass% and more preferably 90 to 99 mass%.

Further, the negative electrode active material layer may further contain a conductive member, a lithium salt, an ion conductive polymer, a binder, and the like as other components. Incidentally, preferred embodiments of the lithium salt and the ion conductive polymer are the same as described in the positive electrode active material layer, and thus herein, the detailed description thereof will be omitted.

The conductive member has a function of forming an electrical conductive path in the negative electrode active material layer. For example, an embodiment is mentioned in which at least a part of the conductive member forms an electroconductive path for electrical connection from a first principal surface, which is in contact with the electrolyte layer side of the negative electrode active material layer, to a second principal surface, which is in contact with the current collector. With such an embodiment, an electron transfer resistance in a thickness direction in the negative electrode active material layer is reduced. As a result, the output characteristics of the battery at a high rate may be improved.

Incidentally, whether or not at least a part of the conductive member forms an electroconductive path for electrical connection from a first principal surface, which is in contact with the electrolyte layer side of the negative electrode active material layer, to a second principal surface, which is in contact with the current collector, can be checked by the cross-section of the negative electrode active material layer using SEM or an optical microscope.

The conductive member is preferably a conductive fiber having a fibrous form. Specific examples thereof include carbon fibers such as PAN carbon fibers and pitch carbon fibers, conductive fibers containing a highly conductive metal or graphite uniformly dispersed in synthetic fibers, metal fibers obtained by converting metals such as stainless steel into fibers, conductive fibers containing organic fibers whose surface is coated with a metal, conductive fibers containing organic fibers whose surface is coated with a resin containing a conductive material, and the like. Among these, from the viewpoints of having electrical conductivity and light weight, carbon fibers are preferred. In some cases, carbon black such as acetylene black may be used as the conductive member.

In a case where the negative electrode active material layer contains the conductive member, the content of the conductive member in the negative electrode active material layer is preferably 0.5 to 20 mass% and more preferably 1 to 10 mass%, with respect to 100 mass% of the total solid content of the negative electrode active material layer (the sum of solid contents of all members). When the content of the conductive member is in the above-described range, an electrical conductive path can be favorably formed in the negative electrode active material layer, and a decrease in energy density of the battery can be suppressed.

(Binder)

Examples of the binder which may be used in the negative electrode active material layer 13 include a solvent-based binder such as polyvinylidene fluoride (PVdF) and a water-based binder such as styrene-butadiene rubber (SBR).

In the lithium ion secondary battery according to this aspect, as a member constituting the negative electrode active material layer, a member other than the above-described negative electrode active material may be appropriately used. However, from the viewpoint of improving the energy density of the battery, it is preferable not to include a member which does not contribute to proceeding of charging and discharging reactions much. For example, it is preferable not to use a binder, which is added for binding the negative electrode active material and another member and maintaining the structure of the negative electrode active material layer, as much as possible. Specifically, the content of the binder is preferably 1 mass% or less, more preferably 0.5 mass% or less, further preferably 0.2 mass% or less, particularly preferably 0.1 mass% or less, and most preferably 0 mass%, with respect to 100 mass% of the total solid content contained in the negative electrode active material layer.

In the lithium ion secondary battery of this aspect, the thicknesses of the positive electrode active material layer and the negative electrode active material layer are not particularly limited, and conventionally known knowledge on batteries can be appropriately referred to. As an example, the thickness of the active material layer is preferably 1 to 500 $\mu$m and more preferably 2 to 300 $\mu$m in consideration of the intended use (output-oriented, energy-oriented or the like) of the battery and ion conductivity.

<Current collector>

The current collectors 11 and 12 are composed of conductive materials. The size of the current collector is determined in accordance with an intended use of the battery. For example, when a current collector is used in a large size battery required to have a high energy density, a current collector having a large area is used.

The thickness of the current collector is also not particularly limited. The thickness of the current collector is preferably 1 to 100 $\mu$m.

The shape of the current collector is also not particularly limited. In the laminate type battery 10 illustrated in Fig. 3, a mesh (expanded grid or the like) and the like can be used in addition to a current collecting foil.

Incidentally, in a case where an alloy thin film of the negative electrode active material is directly formed on the negative electrode current collector 12 by a sputtering method or the like, a current collecting foil is desirably used.

A material constituting the current collector is not particularly limited. For example, a metal, or a resin which is composed of a conductive polymer material or non-conductive polymer material with a conductive filler added thereto may be employed.

Specific examples of the metal include aluminum, nickel, iron, stainless steel, titanium, copper, and the like. Other than, a clad material of nickel and aluminum, a clad material of copper and aluminum, a plating material of combination of these materials, or the like may be preferably used. Further, a foil obtained by coating a surface of metal with aluminum may be used. Of these, from the viewpoints of electron conductivity, battery operating potential, adherence of the negative electrode active material to the current collector by sputtering, and the like, aluminum, stainless steel, copper, and nickel are preferred.

Further, examples of the conductive polymer material include polyaniline, polypyrrole, polythiophene, polyacetylene, polyparaphenylene, polyphenylenevinylene, polyacrylonitrile, polyoxadiazole, and the like. Such a conductive polymer material has a sufficient electrical conductivity without addition of the conductive filler, and thus has advantages of simplifying the manufacturing process and reducing the weight of the current collectors.

Examples of the non-conductive polymer material include polyethylene (PE; high-density polyethylene (HDPE), low-density polyethylene (LDPE), and the like), polypropylene (PP), polyethylene terephthalate (PET), polyethernitrile (PEN), polyimide (PI), polyamide imide (PAI), polyamide (PA), polytetrafluoroethylene (PTFE), styrene-butadiene rubber (SBR), polyacrylonitrile (PAN), polymethylacrylate (PMA), polymethylmethacrylate (PMMA), polyvinylchloride (PVC), polyvinylidene fluoride (PVdF), polystyrene (PS), and the like. Such a non-conductive polymer material may have excellent potential resistance or solvent resistance.

A conductive filler may be added as necessary to the above-described conductive polymer material or non-conductive polymer material. In particular, in a case where the resin constituting the base material of the current collectors is formed from only a non-conductive polymer, a conductive filler needs to be added to impart electrical conductivity to the resin.

The conductive filler can be used without any particular limitation as long as it is a material having electrical conductivity. Examples of a material excellent in electrical conductivity, potential resistance, or lithium ion blocking properties include a metal, a conductive carbon, and the like. As the metal, although not particularly limited, it is preferable to include at least one kind of metals selected from the group consisting of Ni, Ti, Al, Cu, Pt, Fe, Cr, Sn, Zn, In, Sb, and K, and alloys or metal oxides including the same. Further, the conductive carbon is not particularly limited. Preferably, the conductive carbon includes at least one kind selected from the group consisting of acetylene black, Vulcan (registered trademark), Black Pearl (registered trademark), carbon nanofibers, Ketjen Black (registered trademark), carbon nanotubes, carbon nanohorns, carbon nanoballoons, and fullerene.

The amount of conductive filler added is not particularly limited as long as it is enough to impart a sufficient electrical conductivity to the current collector, and is preferably 5 to 80 mass%.

[Electrolyte layer]

As an electrolyte constituting the electrolyte layer 17, a liquid electrolyte or a polymer electrolyte may be used.

The liquid electrolyte has a configuration in which a lithium salt (an electrolyte salt) is dissolved in an organic solvent. Examples of the organic solvent include carbonates such as ethylene carbonate (EC), propylene carbonate (PC), butylene carbonate (BC), vinylene carbonate (VC), dimethyl carbonate (DMC), diethyl carbonate (DEC), ethylmethyl carbonate (EMC), and methylpropyl carbonate (MPC). The organic solvent may be used singly or as a mixture of two or more kinds thereof.

Further, as the lithium salt, a compound that can be added to the active material layers of the electrodes, such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$, can be employed.

Meanwhile, the polymer electrolytes are classified into a gel electrolyte containing an electrolyte solution and an intrinsic polymer electrolyte not containing an electrolyte solution.

The gel electrolyte has a configuration in which the above-described liquid electrolyte (electrolyte solution) is injected into a matrix polymer formed from an ion conductive polymer. Using a gel polymer electrolyte as the electrolyte is excellent in terms of the point that fluidity of the electrolyte is eliminated and it becomes easy to block ion conduction between the respective layers.

Examples of the ion conductive polymer used as the matrix polymer include polyethylene oxide (PEO), polypropylene oxide (PPO), copolymers thereof, and the like. In such a polyalkylene oxide-based polymer, an electrolyte salt such as a lithium salt is well soluble.

The proportion of the liquid electrolyte (electrolyte solution) in the gel electrolyte should not be particularly limited, but from the viewpoint of ion conductivity or the like, is desirably set to several mass% to 98 mass%. In this embodiment, the gel electrolyte containing a large amount of electrolyte solution, that is, having a proportion of the electrolyte solution of 70 mass% or more is particularly effective.

Incidentally, in a case where the electrolyte layer is composed of a liquid electrolyte or a gel electrolyte, a separator may be used in the electrolyte layer. Examples of the specific configuration of the separator (including non-woven fabric) include a microporous membrane formed from polyolefin such as polyethylene and polypropylene, a porous plate, and a non-woven fabric.

The matrix polymer of the gel electrolyte may exhibit excellent mechanical strength by forming a cross-linked structure. To form a cross-linked structure, by using an adequate polymerization initiator, a polymerizable polymer (for example, PEO or PPO) for forming a polymer electrolyte just needs to be subjected to a polymerization treatment such as thermal polymerization, ultraviolet polymerization, radiation polymerization, or electron beam polymerization.

[Current collecting plate and lead]

A current collecting plate may be used for extracting current out of the battery. The current collecting plate is electrically connected to the current collector and the lead and is extracted out of a laminate sheet as a battery outer casing member.

The material constituting the current collecting plate is not particularly limited, and a known highly conductive material, which is conventionally used as a current collecting plate for a lithium ion secondary battery, may be used. As the material constituting the current collecting plate, for example, a metallic material such as aluminum, copper, titanium, nickel, stainless steel (SUS), or alloys thereof is preferred, and more preferably, from the viewpoints of light weight, corrosion resistance, and high electrical conductivity, aluminum, copper, or the like is preferred. Incidentally, as the positive electrode current collecting plate and the negative electrode current collecting plate, the same material may be used or different materials may be used.

A positive electrode terminal lead and a negative electrode terminal lead are also used as necessary. As the materials of the positive electrode terminal lead and the negative electrode terminal lead, a terminal lead used in a conventional lithium ion secondary battery can be used. Incidentally, it is preferable that a part extracted from the battery outer casing member 29 be covered with a heat-resistance insulating heat-shrinkable tube or the like so that electric leakage due to contact with peripheral devices, wires, and the like does not influence products (for example, automobile components, particularly, electronic devices and the like).

[Battery outer casing member]

As the battery outer casing member 29, a known metal can casing can be used, and a bag-shaped casing which can cover the power generating element and uses a laminate film containing aluminum may be used. As the laminate film, for example, a laminate film having a three layer structure which is obtained by stacking PP, aluminum, and nylon in this order, or the like can be used, but the laminate film is not limited thereto at all. A laminate film is desirable from the viewpoints that the laminate film is excellent in high output and cooling performance and can be suitably used in batteries of large-size devices for EVs and HEVs.

Incidentally, the above-described lithium ion secondary battery can be manufactured by a conventionally known manufacturing method.

[Exterior configuration of lithium ion secondary battery]

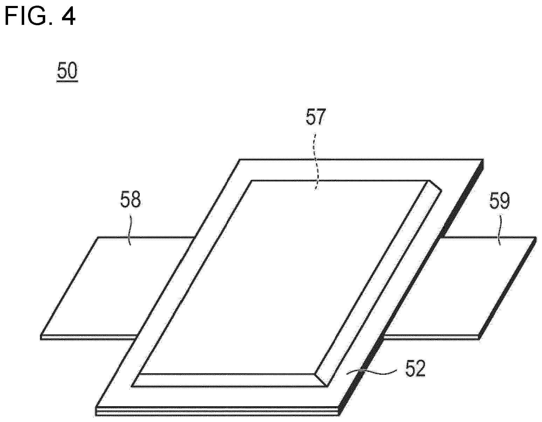

Fig. 4 is a perspective view illustrating an exterior of a laminate type flat lithium ion secondary battery.

As illustrated in Fig. 4, a laminate type flat lithium ion secondary battery 50 has a rectangular flat shape, and from both sides of the battery 50, a positive electrode current collecting plate 59 and a negative electrode current collecting plate 58 for extracting electric power are drawn out. A power generating element 57 is wrapped with a battery outer casing member 52 of the lithium ion secondary battery 50, the periphery thereof is thermally fused, and the power generating element 57 is hermetically sealed in a state where the positive electrode current collecting plate 59 and the negative electrode current collecting plate 58 are drawn to the outside. Herein, the power generating element 57 corresponds to the power generating element 21 of the lithium ion secondary battery (laminate type battery) 10 illustrated in Fig. 3. The power generating element 57 includes a plurality of single battery layers (single cells) 19, each of which includes a positive electrode (positive electrode active material layer) 13, an electrolyte layer 17, and a negative electrode (negative electrode active material layer) 15.

Incidentally, the above-described lithium ion secondary battery is not limited to a battery having a laminate type flat shape (laminate cell). The winding type lithium ion battery is not particularly limited and may include a battery having a cylindrical shape (coin cell), a battery having a prismatic shape (prismatic cell), a battery having a rectangular flat shape obtained by deforming the cylindrical shape, further a cylinder cell, and the like. For the cylindrical or prismatic lithium ion secondary battery, the outer casing member thereof is not particularly limited and may be a laminate film, a conventional cylindrical can (metallic can), or the like. Preferably, the power generating element is packed with an aluminum laminate film. Such a configuration can reduce the weight of the lithium ion secondary battery.

Further, the extraction configuration of the positive electrode current collecting plate 59 and the negative electrode current collecting plate 58 illustrated in Fig. 4 is also not particularly limited. The positive electrode current collecting plate 59 and the negative electrode current collecting plate 58 may be drawn out from the same side, the positive electrode current collecting plate 59 and the negative electrode current collecting plate 58 may be individually divided into plural portions to be extracted from different sides, or the like, and the extraction configuration thereof is not limited to the configuration illustrated in Fig. 4. Further, in the winding type lithium ion battery, a terminal may be formed, for example, using a cylindrical can (a metallic can) instead of the current collecting plate.

As described above, the negative electrode and the lithium ion secondary battery using the negative electrode active material for the lithium ion secondary battery of this aspect can be suitably used as high-capacity power sources of electric vehicles, hybrid electric vehicles, fuel cell vehicles, hybrid fuel cell vehicles, and the like. That is, the negative electrode and the lithium ion secondary battery using the negative electrode active material for the lithium ion secondary battery of this aspect can be suitably used in vehicle driving power sources and auxiliary power sources requiring high volume energy density and high volume power density.

Incidentally, in the above-described embodiment, the lithium ion secondary battery has been described as an example of the electric device, but is not limited thereto, and the embodiment can be applied to another type of secondary batteries and also be applied to primary batteries. Further, the embodiment can also be applied to capacitors such as lithium ion capacitors as well as batteries.

Examples

The present invention will be described in more detail using the following examples. However, the technical scope of the present invention is not limited only to the following examples.

[Comparative Example 1]

(Production of negative electrode sample C1)

Inside a glove box (dew point: -80°C), hard carbon serving as a negative electrode active material and an electrolyte solution were mixed and stirred for 1 minute using an oscillator, thereby preparing a negative electrode active material slurry. At this time, the amount of electrolyte solution was adjusted such that the solid content ratio (ER) would be 5 mass%. Further, as the electrolyte solution, a solution obtained by dissolving lithium hexafluorophosphate (LiPF$_6$) serving as a lithium salt in an organic solvent, which is obtained by mixing ethylene carbonate (EC) and propylene carbonate (PC) at a ratio of EC : PC = 1 : 1 (volume ratio), to have a concentration of 1 mol/L was used.

Subsequently, a suction jig in which a guide die-cut into φ15 mm is disposed on a base material formed from a nickel mesh (opening: 5 μm) was prepared, and the negative electrode active material slurry prepared above was put in the inside of the guide. Then, by performing suction filtration using a vacuum suction apparatus from the lower portion of the nickel mesh, the solvent component contained in the negative electrode active material slurry was removed to obtain a negative electrode cake. Then, the negative electrode cake from which the solvent component was removed was removed from the guide, pressing was then performed using a hydraulic pressing machine to increase a density, thereby obtaining a negative electrode sample C1. Incidentally, the porosity of the obtained negative electrode sample was 40%.

(Production of positive electrode sample)

Inside a glove box (dew point: -80°C), a coated lithium-cobalt-aluminum composite oxide (composition: LiNi$_{0.8}$Co$_{0.15}$Al$_{0.05}$O$_2$) serving as the positive electrode active material and the electrolyte solution used above were mixed and stirred for 1 minute using an oscillator, thereby preparing a positive electrode active material slurry. At this time, the amount of electrolyte solution was adjusted such that the solid content ratio (ER) would be mass 5%.

Subsequently, a suction jig in which a guide die-cut into φ15 mm is disposed on a base material formed from a nickel mesh (opening: 5 μm) was prepared, and the positive electrode active material slurry prepared above was put in the inside of the guide. Then, by performing suction filtration using a vacuum suction apparatus from the lower portion of the nickel mesh, the solvent component contained in the positive electrode active material slurry was removed to obtain a positive electrode cake. Then, the positive electrode cake from which the solvent component was removed was removed from the guide, pressing was then performed using a hydraulic pressing machine to increase a density, thereby obtaining a positive electrode sample. Incidentally, the porosity of the obtained positive electrode sample was 45%. Further, the basis weight of the positive electrode cake was adjusted such that a value of the ratio (capacity ratio) of the negative electrode capacity A to the positive electrode capacity C would satisfy A/C = 1.2.

(Production of power generating element C1)

The negative electrode sample C1 and the positive electrode sample produced above were stacked with a microporous membrane made of polypropylene (PP) (thickness: 25 μm) prepared as the separator, thereby producing a power generating element C1.

[Comparative Example 2]

(Production of negative electrode half cell)

A negative electrode cake produced by the same method as in Comparative Example 1 was prepared as a working electrode of a negative electrode half cell. Further, a lithium metal foil (thickness: 200 $\mu$m) was prepared as a counter electrode of the negative electrode half cell. Furthermore, two sheets of copper foil (thickness: 15 $\mu$m) were prepared as the current collectors, and a microporous membrane made of polypropylene (PP) (thickness: 25 $\mu$m) was prepared as the separator.

The respective members prepared above were stacked in the order of the copper foil (current collector)/the negative electrode cake (working electrode)/the microporous membrane made of PP (separator)/the lithium metal foil (counter electrode)/the copper foil (current collector) to produce a laminate body. Next, an electrode lead was connected to the copper foil (current collector) located at both outermost layers of the obtained laminate body, and the laminate body was sealed inside an outer casing body formed from a laminate sheet such that the electrode lead was exposed outside. Then, 150 $\mu$L of the same electrolyte solution as described above was injected, and then the outer casing body was vacuum-sealed to produce a negative electrode half cell.

(Production of negative electrode sample C2 (pre-doping step))

The negative electrode half cell produced above was placed at the inside of a thermostatic bath (PFU-3K manufactured by ESPEC CORP.) set to 45°C, the temperature was adjusted, and in this state, a charging treatment was performed to the negative electrode half cell by using a charge-discharge apparatus (HJ0501SM8A manufactured by HOKUTO DENKO CORPORATION). Incidentally, in this charging treatment, charging was performed at a charge current of 0.05 C and CCCV charging (constant current/constant voltage mode) until the potential (vs. Li+/Li) of the negative electrode reached 1.00 V (first potential $E_1$). In this way, the negative electrode pre-doped with the lithium ion was extracted from the negative electrode half cell subjected to the charging treatment and was used as a negative electrode sample C2.

(Production of power generating element C2)

The negative electrode sample C2 and the positive electrode sample produced above were stacked with a microporous membrane made of polypropylene (PP) (thickness: 25 $\mu$m) prepared as the separator in between, thereby producing a power generating element C2.

[Comparative Example 3]

(Production of power generating element C3)

A negative electrode sample C3 was produced by the same method as in Comparative Example 2 described above, except that the first potential ($E_1$) in the pre-doping step when the negative electrode sample was produced was set to 0.75 V (vs. Li+/Li). Next, a power generating element C3 was produced using the negative electrode sample C3 by the same method as in Comparative Example 1 described above.

[Comparative Example 4]

[Production of power generating element C4]

A negative electrode sample C4 was produced by the same method as in Comparative Example 2 described above, except that the first potential ($E_1$) in the pre-doping step when the negative electrode sample was produced was set to 0.30 V (vs. Li+/Li). Next, a power generating element C4 was produced using the negative electrode sample C4 by the same method as in Comparative Example 1 described above.

[Reference Example 1]

(Production of negative electrode sample E1 (pre-doping step/dedoping step))

A charging treatment was performed to a negative electrode half cell until the potential (vs. Li+/Li) of the negative electrode reached 0.75 V (vs. Li+/Li) that was the first potential ($E_1$) (pre-doping step) by the same method as in Comparative Example 3 when a negative electrode sample was produced. Thereafter, a discharging treatment was performed to the negative electrode half cell by using the same charge-discharge apparatus (dedoping step). Incidentally, in the discharging treatment in this dedoping step, discharging was performed at a discharge current of 0.05 C and CC discharging (constant current mode) until the potential (vs. Li+/Li) of the negative electrode reached 1.01 V (second potential $E_2$) from 0.75 V. In this way, the negative electrode pre-doped with the lium ion was extracted from the negative electrode half cell subjected to the charging treatment and the discharging treatment and was used as a negative electrode sample E1.

(Production of power generating element E1)

The negative electrode sample E1 and the positive electrode sample produced above were stacked with a microporous membrane made of polypropylene (PP) (thickness: 25 $\mu$m) prepared as the separator in between, thereby producing a power generating element E1.

[Reference Example 2]

(Production of power generating element E2)

A negative electrode sample E2 was produced by the same method as in Reference Example 1 described above, except that the first potential ($E_1$) in the pre-doping step when the negative electrode sample was produced was set to 0.20 V (vs. Li+/Li) and the second potential ($E_2$) in the dedoping step was set to 0.75 V (vs. Li+/Li). Next, a power generating element E2 was produced using the negative electrode sample E2 by the same method as in Reference Example 1 described above.

[Reference Example 3]

(Production of power generating element E3)

A negative electrode sample E3 was produced by the same method as in Reference Example 1 described above, except that the first potential ($E_1$) in the pre-doping step when the negative electrode sample was produced was set to 0.01 V (vs. Li+/Li) and the second potential ($E_2$) in the dedoping step was set to 0.77 V (vs. Li+/Li). Next, a power generating element E3 was produced using the negative electrode sample E3 by the same method as in Reference Example 1 described above.

[Reference Example 4]

(Production of power generating element E4)

A negative electrode sample E4 was produced by the same method as in Reference Example 1 described above, except that the first potential ($E_1$) in the pre-doping step when the negative electrode sample was produced was set to 0.30 V (vs. Li+/Li) and the second potential ($E_2$) in the dedoping step was set to 1.01 V (vs. Li+/Li). Next, a power generating element E4 was produced using the negative electrode sample E4 by the same method as in Reference Example 1 described above.

[Example 1]

(Production of negative electrode sample E5 (pre-doping step/dedoping step))

Inside a glove box (dew point: -80°C), hard carbon serving as a negative electrode active material and an electrolyte solution were mixed, lithium metal powder was further added at room temperature, and the resultant product was kneaded for 20 hours at a speed of 30 to 60 rpm using a kneader (HIVIS MIX, PRIMIX Corporation). Through this kneading treatment, the lithium ion was pre-doped to the negative electrode active material and the lithium metal powder was eliminated (pre-doping step). Incidentally, as the electrolyte solution, a solution obtained by dissolving lithium hexafluorophosphate ($LiPF_6$) serving as a lithium salt in an organic solvent, which is obtained by mixing ethylene carbonate (EC) and propylene carbonate (PC) at a ratio of EC : PC = 1 : 1 (volume ratio), to have a concentration of 1 mol/L was used. Further, the amount of lithium metal powder added was adjusted such that the first potential ($E_1$) in the pre-doping step would be 0.30 V (vs. Li+/Li).
Subsequently, a negative electrode active material not doped with a lithium ion (the same hard carbon as described above) was further added to the mixture after the pre-doping step, and the resultant mixture was kneaded at a speed of 30 to 60 rpm using a kneader (HIVIS MIX, manufactured by PRIMIX Corporation) until the potential of the mixture was increased and then stabilized, thereby preparing a negative electrode active material slurry. By this kneading treatment, the lithium ion was dedoped from the negative electrode active material doped with the lithium ion in the pre-doping step (dedoping step), and this lithium ion was doped to the negative electrode active material, which had been newly added, not doped with a lithium ion. As a result, the potential of the mixture was stabilized at 0.75 V (vs. Li+/Li). That is, the second potential ($E_2$) in this Example was 0.75 V (vs. Li+/Li). Incidentally, the amount of electrolyte solution in the pre-doping step was adjusted such that the solid content ratio (ER) of the negative electrode active material slurry obtained in this way would be 5%.

Subsequently, a suction jig in which a guide die-cut into $\varphi$15 mm is disposed on a base material formed from a nickel mesh (opening: 0.5 $\mu$m) was prepared, and the negative electrode active material slurry prepared above was put in the inside of the guide. Then, by performing suction filtration using a vacuum suction apparatus from the lower portion of the nickel mesh, the solvent component contained in the negative electrode active material slurry was removed to obtain a negative electrode cake. Then, the negative electrode cake from which the solvent component was removed was removed from the guide, pressing was then performed using a hydraulic pressing machine to increase a density, thereby obtaining a negative electrode sample E5. Incidentally, the porosity of the obtained negative electrode sample was 40%.

(Production of power generating element E5)

The negative electrode sample E5 and the positive electrode sample produced above were stacked with a microporous membrane made of polypropylene (PP) (thickness: 25 $\mu$m) prepared as the separator in between, thereby producing a power generating element E5.

[Evaluation of electrode sample]

The respective power generating elements produced in Comparative Examples, Reference Examples and Example 1 described above were disposed in a cell of an emitted gas pressure measurement cell (ECC-Press-DL manufactured by EL-CELL GmbH) provided with electrodes on both ends. Incidentally, 100 $\mu$L of the electrolyte solution was injected when the laminate body is disposed in the cell.

The emitted gas pressure measurement cell in which the laminate body was disposed described above was placed inside a thermostatic bath (25°C), the temperature thereof was adjusted, and in this state, a charging-discharging treatment was performed once with respect to the laminate body using a charge-discharge apparatus (manufactured by HOKUTO DENKO CORPORATION). Incidentally, in this charging-discharging treatment, charging was performed by CCCV charging at a charge current of 0.05 C until a final voltage of 4.2 V, and then discharging was performed at a discharge current of 0.05 C until a final voltage of 2.5 V.

Thereafter, the following respective evaluations were performed. Results thereof are presented in the following Table 1.

(Measurement of charge-discharge efficiency (coulombic efficiency))

The battery capacity at the time of charging and the battery capacity at the time of discharging were measured respectively when the above-described charging-discharging treatment were performed with respect to the laminate body. Then, the charge-discharge efficiency (coulombic efficiency) was calculated as the percentage of the battery capacity at the time of discharging with respect to the battery capacity at the time of charging. That is, the charge-discharge efficiency (coulombic efficiency) is a value represented by the following equation, and as the value increases, the charge energy can be efficiently utilized in discharging, which is preferable.

```
Charge-discharge efficiency (coulombic efficiency) [%]

= Battery capacity [mAh/g] at the time of

discharging/Battery capacity [mAh/g] at the time of charging ×

100
```

EP 3 657 579 B1

(Measurement of maximum cell internal pressure increase width ($\Delta P_{max}$) at the time of initial charging)

By using the emitted gas pressure measurement cell in which the laminate body was disposed described above, the internal pressure of the measurement cell can be measured over time. By using this, a change in internal pressure of the measurement cell when the above-described charging treatment was performed with respect to the laminate body was monitored over time, and the maximum value of a difference in internal pressure of the measurement cell with respect to the internal pressure of the measurement cell at the time of start of the charging treatment was measured as the maximum cell internal pressure increase width ($\Delta P_{max}$) and was used as an index for the gas generation amount from the laminate body. That is, the maximum cell internal pressure increase width ($\Delta P_{max}$) is a value represented by the following equation, and as this value decreases, the gas generation amount is small, which is preferable.

```
Maximum cell internal pressure increase width (ΔPmax) [mbar]

= Maximum value of the internal pressure [mbar] of the

measurement cell at the time of charging - Internal pressure

[mbar] of the measurement cell at the time of starting the charge
```

Incidentally, in the measurement using the power generating element C1 produced in Comparative Example 1, $\Delta P_{max}$ was 4.5 [mbar] as presented in the following Table 1, and the potential ($E_{g(max)}$) of the negative electrode when this value was shown was 0.3 V (vs. Li+/Li). From this, in Reference Examples 2 to 4 described above, the relationship "$E_1 < E_{g(max)}$" is satisfied. Further, regarding the potential (second potential $E_2$) of the negative electrode active material with respect to the lithium metal at the end of the dedoping step, the value $E_2$ at which the initial discharge capacity becomes maximum was 0.76 V (vs. Li+/Li). From this, in Reference Examples 1 and 2, and Example 1 described above, $E_2$ is regarded as "potential at which the initial discharge capacity becomes maximum."

(Confirmation of existence of precipitation of lithium dendrite)

After the end of the charging-discharging treatment with respect to the laminate body described above, the laminate body was disassembled, the pulverized product of the negative electrode was observed using a solid Li-NMR apparatus, and existence of precipitation of a lithium dendrite in the negative electrode was confirmed on the basis of existence of peaks near a chemical shift ($\delta$) of 270 ppm corresponding to the metal lithium in the Li-NMR spectrum.

[Table 1]

| | Existence of pre-doping step | Existence of dedoping step | Pre-doping step First potential ($E_1$) [V] (vs. Li+/Li) | Dedoping step Second potential ($E_2$) [V] (vs. Li+/Li) | Charge-discharge efficiency [%] | $\Delta P_{max}$ | Precipitation of Li dendrite |
|---|---|---|---|---|---|---|---|
| Comparative Example 1 | No | No | - | - | 75 | 4.5 | None |
| Comparative Example 2 | Yes | No | 1.00 | - | 82 | 3.8 | None |
| Comparative Example 3 | Yes | No | 0.75 | - | 89 | 2.2 | None |
| Comparative Example 4 | Yes | No | 0.30 | - | 88 | 0.5 | Large amount |

(continued)

| | Existence of pre-doping step | Existence of dedoping step | Pre-doping step First potential $(E_1)$ [V] (vs. Li+/Li) | Dedoping step Second potential $(E_2)$[V] (vs. Li+/Li) | Charge-discharge efficiency [%] | $\Delta P_{max}$ | Precipitation of Li dendrite |
|---|---|---|---|---|---|---|---|
| Reference Example 1 | Yes | Method A | 0.75 | 1.01 | 90 | 0.5 | None |
| Reference Example 2 | Yes | Method A | 0.20 | 0.75 | 90 | < 0.1 | None |
| Reference Example 3 | Yes | Method A | 0.01 | 0.77 | 89 | < 0.1 | None |
| Reference Example 4 | Yes | Method A | 0.30 | 1.01 | 88 | < 0.1 | None |
| Example 1 | Yes | Method B | 0.30 | 0.75 | 90 | 0.6 | None |
| * "Method A" is an external short circuit method using a negative electrode half cell, and "Method B" is a mixing method with an undoped active material. | | | | | | | |

From the results presented in the above Table 1, it is found that, by performing the pre-doping treatment with respect to the negative electrode active material using a method for pre-doping a negative electrode active material according to the present invention, generation of a lithium dendrite at the time of charging and discharging is suppressed while sufficiently suppressing an amount of gas generated (using $\Delta P_{max}$ as an index) at the time of initial charging of a lithium ion secondary battery. Particularly, it is also found that, by setting the first potential $(E_1)$ to 0.30 V (vs. Li+/Li) or less using an external short circuit method, the gas generation amount can be dramatically decreased. Further, it is also found that, by setting the first potential $(E_1)$ to 0.20 V (vs. Li+/Li) or less using an external short circuit method, the charge-discharge efficiency can also be significantly improved.

Reference Signs List

10, 50　　Lithium ion secondary battery (laminate type battery)
11　　　　Negative electrode current collector
12　　　　Positive electrode current collector
13　　　　Negative electrode active material layer
15　　　　Positive electrode active material layer
17　　　　Electrolyte layer
19　　　　Single battery layer
21, 57　　Power generating element
25, 58　　Negative electrode current collecting plate
27, 59　　Positive electrode current collecting plate
29, 52　　Battery outer casing member (laminate film)

**Claims**

1. A method for pre-doping a negative electrode active material, the method doping a lithium ion in advance to a negative electrode active material, which is used in an electric device including a positive electrode and a negative electrode, the method comprising:

a pre-doping step of doping the lithium ion to a negative electrode active material to be doped to reduce a potential (vs. Li+/Li) of the negative electrode active material to be doped with respect to a lithium metal; and
a dedoping step of dedoping the lithium ion from the negative electrode active material doped with the lithium ion in the pre-doping step after the pre-doping step to increase a potential (vs. Li+/Li) of the negative electrode active material with respect to the lithium metal,
wherein the negative electrode active material doped with the lithium ion in the pre-doping step is mixed with a negative electrode active material having a potential nobler than that of the negative electrode active material doped with the lithium ion, so that the dedoping step is performed with respect to the negative electrode active material doped with the lithium ion.

2. The method for pre-doping an active material according to claim 1, wherein, when a potential of the negative electrode active material with respect to the lithium metal at an end of the pre-doping step is designated as a first potential ($E_1$) and a potential at which a gas generation amount when the lithium ion is firstly doped to the negative electrode active material to be doped becomes maximum is designated as $E_{g(max)}$, the first potential ($E_1$) satisfies $E_1 \leq E_{g(max)}$.

3. The method for pre-doping an active material according to claim 1 or 2, wherein, when a potential of the negative electrode active material with respect to the lithium metal at an end of the dedoping step is designated as a second potential ($E_2$), the second potential ($E_2$) is a potential at which an initial discharge capacity of the electric device becomes maximum.

4. The method for pre-doping an active material according to any one of claims 1 to 3, wherein the material having a potential nobler than that of the negative electrode active material doped with the lithium ion is a same negative electrode active material as the negative electrode active material doped with the lithium ion and is a negative electrode active material having a shallower dope depth than that of the negative electrode active material doped with the lithium ion.

5. The method for pre-doping an active material according to any one of claims 1 to 4, wherein the active material to be doped is hard carbon.

6. A method for manufacturing a negative electrode for an electric device, the negative electrode being used in an electric device including a positive electrode and a negative electrode, the method comprising:
pre-doping the active material to be doped by the method for pre-doping a negative electrode active material according to any one of claims 1 to 5 to obtain a negative electrode active material doped with a lithium ion and then manufacturing the negative electrode by using the negative electrode active material doped with the lithium ion.

7. A method for manufacturing an electric device including a positive electrode and a negative electrode, the method comprising:
obtaining a negative electrode for an electric device by the method for manufacturing a negative electrode for an electric device according to claim 6 and then manufacturing the electric device by using the negative electrode for an electric device.

8. The method for manufacturing an electric device according to claim 7, wherein the electric device is a lithium ion secondary battery or a lithium ion capacitor.

**Patentansprüche**

1. Verfahren zum Vordotieren eines Negativelektroden-Aktivmaterials, wobei im Verfahren vorab ein Lithiumion auf ein Negativelektroden-Aktivmaterial dotiert wird, welches in einer elektrischen Vorrichtung verwendet wird, die eine positive Elektrode und eine negative Elektrode umfasst, wobei das Verfahren umfasst:

einen Vordotierungsschritt des Dotierens des Lithiumions auf ein zu dotierendes Negativelektroden-Aktivmaterial, um ein Potential (gegenüber Li+/Li) des Negativelektroden-Aktivmaterials, das dotiert werden soll, in Bezug auf ein Lithiummetall zu verringern; und
ein Entdotierungsschritt des Entdotierens des Lithiumions von dem im Vordotierungsschritt mit dem Lithiumion dotierten Negativelektroden-Aktivmaterial nach dem Vordotierungsschritt, um ein Potential (gegenüber Li+/Li) des Negativelektroden-Aktivmaterials in Bezug auf ein Lithiummetall zu erhöhen,
wobei das Negativelektroden-Aktivmaterial, das im Vordotierungsschritt mit dem Lithiumion dotiert ist, mit einem Negativelektroden-Aktivmaterial gemischt wird, dessen Potential edler ist als das des mit dem Lithiumion dotierten Negativelektroden-Aktivmaterials, so dass der Entdotierungsschritt in Bezug auf das mit dem Lithiumion dotierte Negativelektroden-Aktivmaterial durchgeführt wird.

**2.** Verfahren zum Vordotieren eines Aktivmaterials nach Anspruch 1, wobei, wenn ein Potential des Negativelektroden-Aktivmaterials in Bezug auf das Lithiummetall an einem Ende des Vor-Dotierungsschritts als erstes Potential ($E_1$) bezeichnet wird, und ein Potential, bei dem die Gaserzeugungsmenge bei der erstmaligen Dotierung des Lithiumions auf das zu dotierende Negativelektroden-Aktivmaterial maximal ist, als $E_{g(max)}$ bezeichnet wird, das erste Potential ($E_1$) $E_1 \leq E_{g(max)}$ erfüllt.

**3.** Verfahren zum Vordotieren eines Aktivmaterials nach Anspruch 1 oder 2, wobei, wenn ein Potential des Negativelektroden-Aktivmaterials in Bezug auf das Lithiummetall an einem Ende des Entdotierungsschritts als zweites Potential ($E_2$) bezeichnet wird, das zweite Potential ($E_2$) ein Potential ist, bei dem eine anfängliche Entladekapazität des elektrischen Geräts maximal ist.

**4.** Verfahren zum Vordotieren eines Aktivmaterials nach einem der Ansprüche 1 bis 3, wobei das Material mit einem Potential, das edler ist als das des mit dem Lithiumion dotierten Negativelektroden-Aktivmaterials, dasselbe Negativelektroden-Aktivmaterial ist wie das mit dem Lithiumion dotierte Negativelektroden-Aktivmaterial, und ein Negativelektroden-Aktivmaterial mit einer geringeren Dotiertiefe als das mit dem Lithiumion dotierte Negativelektroden-Aktivmaterial ist.

**5.** Verfahren zum Vordotieren eines Aktivmaterials nach einem der Ansprüche 1 bis 4, wobei das zu dotierende Aktivmaterial nicht graphitisierbarer Kohlenstoff ist.

**6.** Verfahren zur Herstellung einer negativen Elektrode für eine elektrische Vorrichtung, wobei die negative Elektrode in einer elektrischen Vorrichtung verwendet wird, die eine positive Elektrode und eine negative Elektrode umfasst, wobei das Verfahren umfasst:
Vordotieren des zu dotierenden Aktivmaterials durch das Verfahren zum Vordotieren eines Negativelektroden-Aktivmaterials gemäß einem der Ansprüche 1 bis 5, um ein mit einem Lithiumion dotiertes Negativelektroden-Aktivmaterial zu erhalten, und anschließendes Herstellen der negativen Elektrode unter Verwendung des mit dem Lithiumion dotierten Negativelektroden-Aktivmaterials.

**7.** Verfahren zur Herstellung einer elektrischen Vorrichtung mit einer positiven Elektrode und einer negativen Elektrode, wobei das Verfahren umfasst:
Bereitstellen einer negativen Elektrode für eine elektrische Vorrichtung durch das Verfahren zum Herstellen einer negativen Elektrode für eine elektrische Vorrichtung gemäß Anspruch 6, und anschließendes Herstellen der elektrischen Vorrichtung unter Verwendung der negativen Elektrode für eine elektrische Vorrichtung.

**8.** Verfahren zur Herstellung einer elektrischen Vorrichtung nach Anspruch 7, wobei die elektrische Vorrichtung eine Lithiumionen-Sekundärbatterie oder ein Lithiumionenkondensator ist.

**Revendications**

**1.** Procédé de pré-dopage d'un matériau actif d'électrode négative, le procédé dopant un ion lithium à l'avance dans un matériau actif d'électrode négative, qui est utilisé dans un dispositif électrique comprenant une électrode positive et une électrode négative, le procédé comprenant :

une étape de pré-dopage consistant à doper l'ion lithium dans un matériau actif d'électrode négative à doper pour réduire un potentiel (par rapport à $Li^+/Li$) du matériau actif d'électrode négative à doper par rapport à un métal lithium ; et
une étape de dédopage consistant à dédoper l'ion lithium depuis le matériau actif d'électrode négative dopé avec l'ion lithium lors de l'étape de pré-dopage après l'étape de pré-dopage pour augmenter un potentiel (par rapport à $Li^+/Li$) du matériau actif d'électrode négative par rapport au métal lithium,
dans lequel le matériau actif d'électrode négative dopé avec l'ion lithium lors de l'étape de pré-dopage est mélangé à un matériau actif d'électrode négative ayant un potentiel plus élevé que celui du matériau actif d'électrode négative dopé avec l'ion lithium, de sorte que l'étape de dédopage est effectuée par rapport au matériau actif d'électrode négative dopé avec l'ion lithium.

**2.** Procédé de pré-dopage d'un matériau actif selon la revendication 1, dans lequel, lorsqu'un potentiel du matériau actif d'électrode négative par rapport au métal lithium à une fin de l'étape de pré-dopage est désigné par un premier potentiel ($E_1$) et un potentiel auquel une quantité de génération de gaz lorsque l'ion lithium est tout d'abord dopé dans le matériau actif d'électrode négative à doper devient maximale est désigné par $E_{g(max)}$, le premier potentiel ($E_1$) satisfait à $E_1 \leq E_{g(max)}$.

3. Procédé de pré-dopage d'un matériau actif selon la revendication 1 ou 2, dans lequel, lorsqu'un potentiel du matériau actif d'électrode négative par rapport au métal lithium à une fin de l'étape de dédopage est désigné par un second potentiel ($E_2$), le second potentiel ($E_2$) est un potentiel auquel une capacité de décharge initiale du dispositif électrique devient maximale.

4. Procédé de pré-dopage d'un matériau actif selon l'une quelconque des revendications 1 à 3, dans lequel le matériau ayant un potentiel plus élevé que celui du matériau actif d'électrode négative dopé avec l'ion lithium est un même matériau actif d'électrode négative que le matériau actif d'électrode négative dopé avec l'ion lithium et est un matériau actif d'électrode négative ayant une profondeur de dopage moins profonde que celle du matériau actif d'électrode négative dopé avec l'ion lithium.

5. Procédé de pré-dopage d'un matériau actif selon l'une quelconque des revendications 1 à 4, dans lequel le matériau actif à doper est du carbone dur.

6. Procédé de fabrication d'une électrode négative pour un dispositif électrique, l'électrode négative étant utilisée dans un dispositif électrique comprenant une électrode positive et une électrode négative, le procédé comprenant :
   le pré-dopage du matériau actif à doper par le procédé de pré-dopage d'un matériau actif d'électrode négative selon l'une quelconque des revendications 1 à 5 pour obtenir un matériau actif d'électrode négative dopé avec un ion lithium puis la fabrication de l'électrode négative en utilisant le matériau actif d'électrode négative dopé avec l'ion lithium.

7. Procédé de fabrication d'un dispositif électrique comprenant une électrode positive et une électrode négative, le procédé comprenant :
   l'obtention d'une électrode négative pour un dispositif électrique par le procédé de fabrication d'une électrode négative pour un dispositif électrique selon la revendication 6 puis la fabrication du dispositif électrique en utilisant l'électrode négative pour un dispositif électrique.

8. Procédé de fabrication d'un dispositif électrique selon la revendication 7, dans lequel le dispositif électrique est une batterie secondaire à ion lithium ou un condensateur à ion lithium.

# FIG. 1

# FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012204306 A
- WO 2017026253 A1

- JP 2012209195 A